# EUROPÄISCHE PATENTANMELDUNG

(11) **EP 1 199 916 A2**
(43) Veröffentlichungstag der Anmeldung: **24.04.2002**
(21) Anmeldenummer: 01124087.6
(22) Anmeldetag: 10.10.2001
(51) Int. Cl.: H05K 7/20, B60R 16/02

(54) **Elektrisches Antriebssystem**

(30) Priorität: 14.10.2000 DE 10051092
(71) Anmelder: ZF FRIEDRICHSHAFEN Aktiengesellschaft, 88038 Friedrichshafen (DE)
(72) Erfinder: Ott, Herbert, 88074 Meckenbeuren (DE); Bachmann, Max, 88339 Bad Waldsee (DE)

(57) **Zusammenfassung**

Das elektrische Antriebssystem für Kraftfahrzeuge und insbesondere Stadtbusse weist einen Traktionsantrieb, eine diesen ansteuernde Leistungselektronik und eine Kühlanordnung für die Leistungselektronik auf, wobei die Kühlanordnung eine Kältemaschine (bzw. Wärmepumpe) mit integrierter Verdampfer- und Kompressoreinheit ist.

## Beschreibung

Die vorliegende Erfindung betrifft ein elektrisches Antriebssystem für Kraftfahrzeuge, insbesondere Stadtbusse, mit einem Traktionsantrieb und einer diesen steuernden Leistungselektronik nach dem Oberbegriff des Anspruchs 1.

Bekannte elektrische Antriebssysteme insbesondere für Stadtbusse weisen einen Traktionsantrieb in Form eines Elektromotors auf, der häufig als Asynchron-Maschine ausgebildet ist, d. h. einen Stator und einen in dem Stator vorgesehenen Rotor aufweist. Der Rotor wird üblicherweise als Kurzschlußläufer ausgebildet und besteht dabei aus elektrisch leitfähigem Aluminium das in Form eines Druckgusses zum Rotor geformt sein kann. Vorteilhafterweise wird das Aluminium bei der Herstellung in die vom Blechpaket des Rotors gebildeten Nuten eingegossen, wobei an den Stirnseiten des Rotors Aluminiumstränge aus den jeweiligen Nuten zu einem Ring zusammengeschlossen und damit kurzgeschlossen werden. Derartige Asynchronmotoren sind vorwiegend hoch ausgenutzte Motoren, deren Wärmeentwicklung eine optimierte Kühlung verlangen.

Aus der EP 0484548 ist eine derartig elektrische Maschine bekannt, mit einem innenliegenden Rotor mit Rotorwelle und mit einem Rotorblechpaket mit außenliegenden Stator. Diese elektrische Maschine ist mit dem Kühlkreislauf des Fahrzeugs verbunden.

Der Transport eines Kühlmediums in einer derartigen elektrischen Maschine ist jedoch durch die baulich bedingte räumliche Begrenzung erschwert, wodurch die anfallenden Wärmemengen insbesondere bei hoch ausgenutzten Maschinen nur schwer abgeführt werden können.

In der deutschen Patentanmeldung 199 055 38 der Anmelderin wurde ein Elektromotor zum Antreiben von Fahrzeugen vorgeschlagen, der einen außenliegenden Stator, einen innenliegenden drehbar gelagerten Rotor, ein Rotorblechpaket und eine mit dem Rotorblechpaket drehfest verbundene Rotorwelle aufweist, wobei der Rotor hohl und die Rotorwelle als eine Stegwelle ausgebildet ist. Die Stegwelle weist an ihrem Umfang eine Anzahl von Stegen auf, die zur Bildung kleiner Wärmeübergangsflächen nur an nahezu linienförmigen Berührungsflächen an dem Rotorblechpaket anliegen. Die Stege sind so ausgeführt, daß sie die benötigte Festigkeit und Steifigkeit aufweisen, aber einen geringen Flächenkontakt mit dem wärmeerzeugenden Blechpaket aufweisen.

Damit ist es möglich, die Lagerung der Rotorwelle und deren Dichtungen vor Beschädigungen auf Grund der auf die Lager übertragenen hohen Wärmemengen zu bewahren.

Aus der deutschen Patentanmeldung 199 055 39 der Anmelderin ist ein weiterer Elektromotor zum Antreiben von Fahrzeugen bekannt, bei der ein Wärmetauscher zur Kühlung eines in dem Elektromotor verwendeten Kühlmediums in den Elektromotor integriert ist, wobei die Führung des Kühlmediums in Kanälen mit großen Querschnitten erfolgen kann und wobei der Wärmetauscher in einem dieser Kanäle angeordnet sein kann. Der Wärmetauscher kann dabei mit Kühlrohren versehen sein, die den Stator umgeben, wobei die Kühlrohre im Wärmetauscher zur Wärmeübertragung mit Kühlrippen in Verbindung stehen können.

Die deutsche Patentanmeldung 199 055 40 der Anmelderin beschreibt schließlich einen Elektromotor zum Antreiben von Fahrzeugen, mit einem außenliegenden Stator und einem innenliegenden drehbar gelagerten Rotor, mit einem Rotorblechpaket und mit einer mit dem Rotorblechpaket drehfest verbundenen Rotorwelle, wobei der Rotor hohl ausgebildet ist und in dem Bereich zwischen Rotorblechpaket und Rotorwelle ein Kühlmedium hindurchgeführt wird. Die Rotorwelle kann in Form eines Schneckenförderers ausgebildet sein oder aber mit Lüftereinrichtungen an wenigstens einem ihrer axialen Enden zur Vergrößerung des Fördervolumens oder des Förderdruckes des Kühlmediums versehen sein. Damit wird ein verbesserter Transport des Kühlmediums ermöglicht, so daß die Lagerung der Maschine vor Beschädigungen geschützt ist.

Neben diesen verschiedenen Bauteilen des Elektromotors muß jedoch auch die Leistungselektronik von derartigen Traktionsantrieben gekühlt werden. Der Wirkungsgrad der darin verwendeten Bauteile hängt von der Betriebstemperatur ab. Bei entsprechend niedriger Kühlmitteltemperatur kann eine entsprechend hohe Leistung umgesetzt werden. Bei Automotiv-Anwendungen kann mit den herkömmlichen Luftwärmetauschern die Vorlauftemperatur dann nicht mehr auf unter 50 °C abgekühlt werden, wenn die Kühlluft bereits eine Temperatur von 40 °C aufweist.

Aufgabe der vorliegenden Erfindung ist es, eine wirksame Kühlanordnung für die Leistungselektronik von Traktionsantrieben zu schaffen

Ausgehend von einem elektrischen Antriebssystem für Kraftfahrzeuge und insbesondere Stadtbusse der eingangs näher genannten Art erfolgt die Lösung dieser Aufgabe mit dem im kennzeichnenden Teil des Anspruchs 1 angegebenen Merkmal; vorteilhafte Ausgestaltungen sind in den Unteransprüchen beschrieben.

Erfindungsgemäß ist also vorgesehen, daß die Kühlanordnung für die Leistungselektronik aus einer Kältemaschine bzw. Wärmepumpe mit integrierter Verdampfer- und Kompressoreinheit besteht. Damit kann das Kühlmittel je nach Auslegung auf entsprechend niedrige Temperatur gebracht werden.

Das Kühlmittel der Kältemaschine bzw. Wärmepumpe kann direkt zur Kühlung der entsprechenden Bauteile der Leistungselektronik verwendet werden; das Kühlmittel kann auch indirekt über einen Sekundärkreislauf zur Kühlung der Bauteile verwendet werden.

Bei Fahrzeugen mit eingebauter Klimaanlage kann diese als zusätzliche Kühlanordnung über einen geeigneten Anschluß zugeschaltet werden.

Der erfindungsgemäße Einbau einer Kältemaschine bzw. Wärmepumpe reduziert die Temperaturen der Bauteile und führt damit zu einer Wirkungsgraderhöhung. Gleichzeitig wird eine Gewichts- und Bauraumreduktion der herkömmlichen Kühler ermöglicht. Bei Einsatz einer Wärmepumpe kann die Rücklauftemperatur entsprechend hoch eingestellt werden, so daß diese eine große Differenz zur Temperatur der Kühlluft aufweist. Mit entsprechend hoher Temperaturdifferenz wird die spezifische Kühlleistung erhöht und eine schlankere Kühlflächenauslegung ermöglicht.

Durch entsprechende Wahl des Kühlmittels und des Druckniveaus der Wärmepumpe bzw. Kältemaschine kann die Rückkühlung auch auf hohem Temperaturniveau erfolgen, so daß der Anschluß auch an vorhandene Kühleinheiten wie z. B. Brennstoffzellenkühlung, Verbrennungsmotorkühlung, Klimaanlage etc., realisiert werden kann.

Die vorhandene Klimaanlage im Fahrzeug kann sogar als Wärmepumpe zur direkten oder indirekten Kühlung herangezogen werden.

Eine Reduzierung des Gesamtgewichtes kann durch Mehrfachnutzung der vorhandenen Einheiten erzielt werden. Eine Reduzierung der Komponentenzahl erlaubt dabei wiederum eine höhere Zuverlässigkeit des Gesamtsystems.

Unter Wärmepumpe im Sinne der Erfindung wird dabei im herkömmlichen Sinne eine Anordnung verstanden, bei der in einem Kreisprozeß mit Hilfe zugeführter Arbeit eine Temperaturdifferenz geschaffen wird, wobei Wärme von einem Wärmespeicher tiefer Temperatur in einen solchen mit höherer Temperatur gepumpt wird. Umgekehrt wird bei einer herkömmlichen Kältemaschine nach dem 2.Hauptsatz der Thermodynamik die mit der Herstellung einer Temperaturdifferenz verbundene Verminderung der Entropie der Anordnung durch Zuführung von Arbeit oder Wärme ausgeglichen.

## Patentansprüche

1. Elektrisches Antriebssystem für Kraftfahrzeuge, insbesondere Stadtbusse, mit einem Traktionsantrieb, einer diesen steuernden Leistungselektronik und einer Kühlanordnung für die Leistungselektronik, **dadurch gekennzeichnet, dass** die Kühlanordnung eine Kältemaschine mit integrierter Verdampfer- und Kompressoreinheit ist.

2. Antriebssystem nach Anspruch 1, **dadurch gekennzeichnet, dass** die Kältemaschine über einen Primärkreislauf mit den zu kühlenden Bauteilen der Leistungselektronik verbunden ist.

3. Antriebssystem nach Anspruch 1, **dadurch gekennzeichnet, dass** die Kältemaschine über einen Sekundärkreislauf mit den zu kühlenden Bauteilen der Leistungselektronik verbunden ist.

4. Antriebssystem nach einem der vorhergehenden Ansprüche, **dadurch gekennzeichnet, dass** die Kühlanordnung mit einem Anschluß versehen ist zur Verbindung mit einer im Kraftfahrzeug vorhandenen Klimaanlage.

5. Antriebssystem nach einem der vorhergehenden Ansprüche, **dadurch gekennzeichnet, dass** die Kältemaschine mit einem Anschluß versehen ist zur Verbindung mit einer im Kraftfahrzeug vorhandenen Brennstoffzellenkühlung.

6. Antriebssysteme nach einem der vorhergehenden Ansprüche, **dadurch gekennzeichnet, dass** die Kühlanordung mit einem Anschluß versehen ist zur Verbindung mit der im Kraftfahrzeug vorhandenen Verbrennungsmotorkühlung.
